# EUROPÄISCHE PATENTSCHRIFT

(11) **EP 0 684 156 B1**
(45) Veröffentlichungstag und Bekanntmachung des Hinweises auf die Patenterteilung: **06.12.2000**
(21) Anmeldenummer: 95107310.5
(22) Anmeldetag: 15.05.1995
(51) Int. Cl.: B60R 11/00

(54) **Komponentensäule, insbesondere für Fahrzeuge zur Personenbeförderung**
Component column, especially for passenger transporting vehicles
Colonne de composants, en particulier pour véhicules de transport de personnes

(30) Priorität: 26.05.1994 DE 9408645 U
(43) Veröffentlichungstag der Anmeldung: 29.11.1995
(73) Patentinhaber: ALSTOM LHB GmbH, 38239 Salzgitter (DE)
(72) Erfinder: Katterwe, Horst-Günter, D-38268 Lengede (DE)

(56) Entgegenhaltungen:
- DE-A- 4 220 844
- US-A- 3 727 813
- US-A- 4 549 712
- US-A- 5 240 215
- "Das ist der Neue ! - Der leistungsfähige Fahrschein-Entwerter von AEG-TELEFUNKEN " DER STADTVERKEHR, Bd. 8, 1976, XP002052360

## Beschreibung

Die Erfindung betrifft eine Komponentensäule, insbesondere für Fahrzeuge zur Personenbeförderung nach dem Oberbegriff des Anspruchs 1.

Bei Fahrzeugen zur Personenbeförderung, insbesondere bei Schienenfahrzeuge für den Nahverkehr, ist es allgemein üblich für den Fahrgast eine Vielzahl von Betätigungs- und Informationskomponenten im Fahrzeug verteilt vorzusehen.

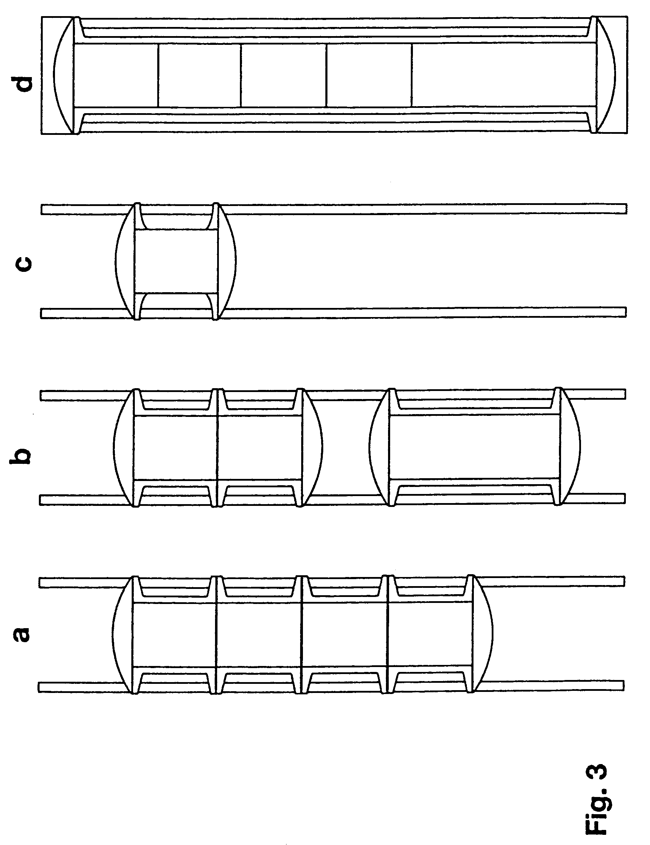

So ist es beispielsweise aus der Zeitschrift "Stadtverkehr, Heft 2/1984, Seite 72, Abb. 3" bekannt, Fahrscheinentwerter an senkrechten Haltestangen zu befestigen.

Aus der Zeitschrift "ZEV-Glas.Ann. 112 (1988) Nr. 10 Oktober, Seite 349, Bild 7" ist es bekannt, Sprechstellen für den Kontakt zwischen Fahrgast und Fahrzeugführer örtlich zusammengefaßt mit Betätigungselementen für den Notausstieg, Fahrerruf und Notmelder in einer Baugruppe vorzusehen.

Aus der Zeitschrift "Nahverkehrs-Praxis 9/1993, Seite 288, Bild 2" ist erkennbar, daß auch bei Schienenfahrzeugen neuester Bauart Funktions- bzw. Betätigungselemente (Fahrkartenentwerter, Türbetätigungselemente) an verschiedenen Haltestangen befestigt sind.

Da Kommunikations-, Betätigungs- und Informationselemente überwiegend elektrisch bzw. mechanisch aktiviert werden, sind entsprechende Zuleitungen notwendig und wagenbauliche Maßnahmen notwendig. Bedingt durch die räumliche Trennung der meisten Komponenten ist der Installationsaufwand entsprechend hoch. Ebenso sind der Wartungsaufwand bzw. Reparaturen oft sehr aufwendig. Die Verteilung der Komponenten an vielen Stellen im Fahrzeug erschwert dem Fahrgast die Orientierung, was insbesondere bei Sicherheitseinrichtungen (Notbremse) im Notfall als nachteilig anzusehen ist.

Aus der US-A-5,240,215 ist eine Tragkonsole mit zwei seitlichen vertikal ausgerichteten Tragprofilen, die mit einer vertikalen Grundplatte verbunden sind, bekannt. In den Tragprofilen sind senkrechte Führungsbahnen angeordnet, in welchen eine verschwenkbare Tragplatte höhenverstellbar gefuhrt ist. Die Tragplatte ist aus der vertikalen Ruhelage in eine horizontale Gebrauchslage verschwenkbar und umgekehrt. Die Tragkonsole soll als nachrüstbare Computer-Tragkonsole vorzugsweise in Fahrzeugführerstünden in Schienenfahrzeugen Verwendung finden.

Der Erfindung liegt die Aufgabe zugrunde, eine Komponentensäule mit Kommunikations-, Betätigungs- und/oder Informationskomponenten zu schaffen, an der in einfacher, wirtschaftlicher, aber optisch ansprechender Ausbildung die individuell variabel einzusetzenden Komponenten in kompakter Anordnung positionierbar sind.

Diese Aufgabe wird bei einer gattungsgemäßen Komponentensäule durch die im kennzeichnenden Teil des Anspruchs 1 genannten Merkmale gelöst.

Vorteilhafte Ausgestaltungen und Weiterbildungen der Erfindungen sind in den Unteransprüchen angegeben.

Die Erfindung wird nachstehend mit bezug auf die Zeichnung an einem Ausführungsbeispiel für den Einsatz in einem Fahrzeug zur Personenbeförderung im öffentlichen Nahverkehr näher erläutert.

Es zeigen
- Fig. 1: Die Vorderansicht einer Komponentensäule;
- Fig. 2: eine Explosionsdarstellung eines Abschnittes einer Komponentensäule in perspektivischer Ansicht;
- Fig. 3: verschiede Beispiele von Ausbildungen und Anordnungen von Komponentensäulen.

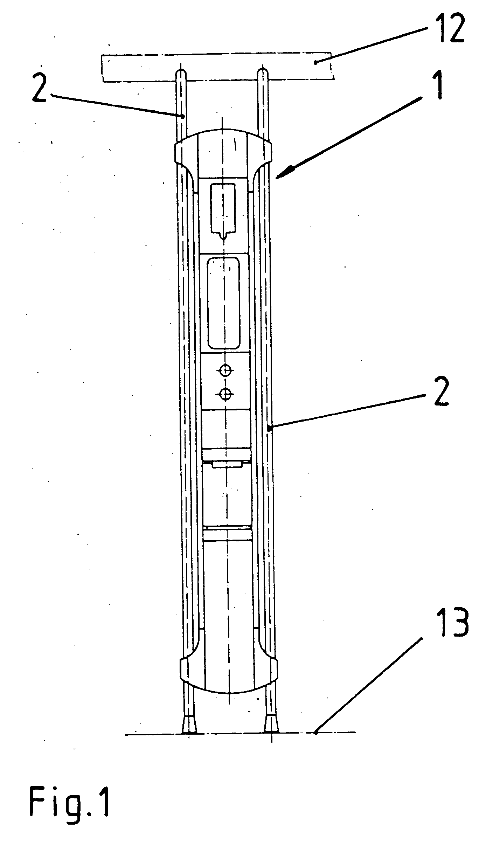

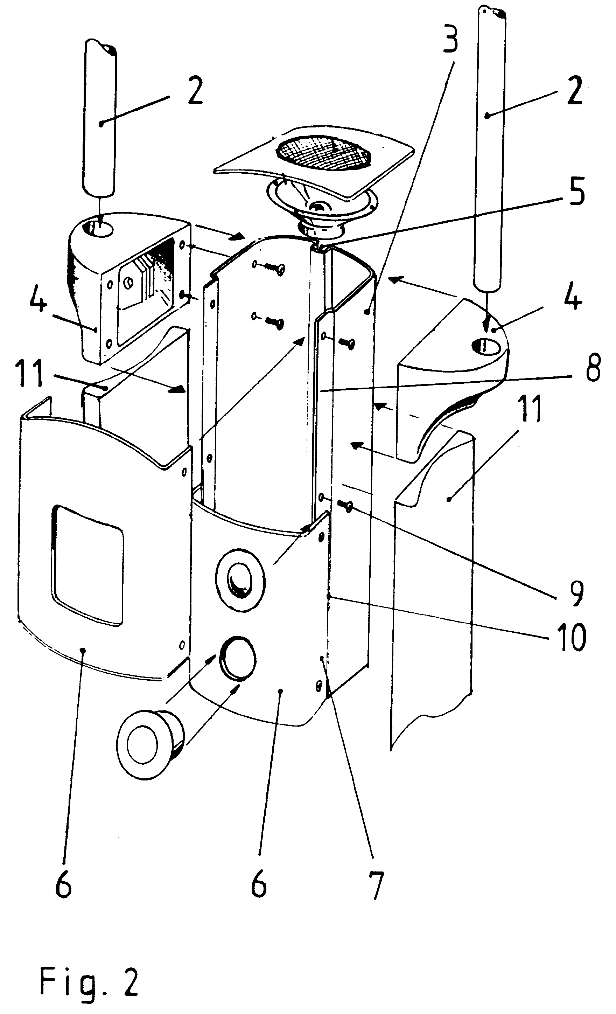

Die Komponentensäule gemäß Fig. 1 weist einen sich senkrecht erstreckenden Säulenkörper 1 auf, der durch zwei im Abstand zueinander angeordnetete Säulenträger 2 (Rohre, Stangen oder dergleichen) gebildet ist, an und zwischen denen ein oder mehrere rückwärtige, gehäuseartige, nach vorn offene Säulengrundkörper 3 befestigt sind. Ein Säulengrundkörper 3 ist an seinen Seiten mit Verbindungselelmenten 4 versehen, die mit den Säulenträgern 2 lösbar befestigt sind. Die Verbindungselemente 4 sind an den Säulengrundkörper 3 angeformt oder vorzugsweise, wie in Fig. 2 dargestellt, mit dem Säulengrundkörper 3 lösbar befestigt.

Die Säulenträger 2 sind beispielsweise als beschichtete Metallrohre mit ca. 35 mm Durchmesser ausgebildet. Die Verbindungselemente 4 sind zweckmäßig aus Metallguß (z.B. Alu-Guß) geformt und gewährleisten durch Preß- und/oder Schraubverbindung (innenseitig verdeckt geschraubt) einen festen Sitz auf den Säulenträgern 2.

Der rückwärtige Säulengrundkörper 3 ist als mittragendes Element aus Metallguß (z.B. Alu-Strangguß) gefertigt und mit mindestens einem Verbindungselement 4, bei längerer Erstreckung des Säulengrundkörpers 3 zweckmäßig mit zwei Verbindungselementen 4, an jedem Säulenträger 2 befestigt.

Die Rückseite des Säulengrundkörpers 3 ist auf der gesamten Länge mit einer eingeformten Nut 5 versehen. Die Nut 5 dient zur Aufnahme eines Trennwandsegmentes oder eines Scheibenelementes.

Der Säulengrundkörper 3 ist durch ein oder mehrere vordere Gehäuseteile 6 abdeckbar. Anzahl und Baulänge der vorderen Gehäuseteile 6 sind entsprechend der Art unter Anzahl der vorgesehenen Komponenten unterschiedlich gestaltbar und weisen bei Bedarf Durchbrüche in unterschiedlicher Form und Ausbildung auf.

Die Verbindung eines vorderen Gehauseteil 6 mit dem rückwärtigen Säulengrundkörper 3 erfolgt derart, daß die Seitenwände 7 der vorderen Gehäusteile 6 die nach innen versetzten Seitenwände 8 des rückwärtigen Säulengrundkörper 3 mindestens bereichsweise, d.h. zweckmäßig im Randbereich übergreifen. Im Überlappungsbereich sind die Seitenwände mittels lösbarer Befestigungselmente 9, z.B. Senkschrauben, verbunden.

Zur Abdeckung des Fügespaltes 10 bzw. der lösbaren Befestigungselemente 9 kann ein Formteil 11, z.B. eine Griffschale aus PU-Schaum, das oben und unten jeweils den Anschluß zu einem Verbindungselelement 4 auf die beiden Seiten des vorderen Gehäuseteils 6 und des Säulengrundkörpers 3 befestigt werden, z.B. mittels Klebung oder Klettbandverbindung.

Die einzubauenden Komponenten werden entweder an der Innnenseite der vorderen Gehäuseteile 6 oder der Innenseite des hinteren Säulengrundkörpers 3 befestigt.

Derart ausgebildet, weist der Säulenkörper 1 nur wenige oder keine sichtbaren Füge- und/oder Schraubverbindungen auf.

Der rückwärtige Säulengrundkörper 3 kann je nach Einsatzfall durch ein oder mehrere kürzere Segmente gebildet und geteilt sein, Fig. 3a bis 3d.

Elektrische Leitungen und mechanische Züge können durch die Säulenträger 2 zur Decke 12 bzw. zum Fußboden 13 des Fahrzeuges geführt werden.

Beim Einsatz von Fahrzeugen im öffentlichen Verkehr sind als optional z.B. die nachfolgend genannten Komponenten zweckmäßig:
- Türnotentriegelung
- Notbremse
- Türöffnung
- Fahrkartenentwerter
- Fahrkartenautomat
- Box für Informationsmaterial
- Abfallbehälter
- Kommunikationseinrichtung (Lautsprecher, Mikrofon)

Die Komponentensäule ist auch für den stationären Einsatz im Bereich von Haltestellen, Bahnhöfen, Taxenständen und öffentlichen Gebäuden und Anlagen geeignet, wobei hier auch weitere Dienstleistungsangebote (z.B. Briefmarkenautomat, Parkscheinausgaben, usw.) vorgesehen werden können.

### Bezugszeichenliste:

- 1: - Säulenkörper
- 2: - Säulenträger
- 3: - Säulengrundkörper
- 4: - Verbindungselement
- 5: - Nut
- 6: - vorderes Gehäuseteil
- 7: - Seitenwände des vorderen Gehauseteils
- 8: - Seitenwände des Säulengrundkörpers
- 9: - Befestigungselement/Schraube
- 10: - Fügespalt
- 11: - Formteil
- 12: - Decke
- 13: - Fußboden

## Patentansprüche

1. Komponentensäule, insbesondere für Fahrzeuge zur Personenbeförderung, wobei die Komponentensäule mindestens eine Kommunikations-, Betätigungs- und/oder Informationskomponente aufweist die in oder an einem sich senkrecht erstreckenden Säulenkörper (1) befestigt ist, und wobie der Säulenkörper (1) zwei senkrecht angeordnete, über ein Abstandselement auf Abstand gehaltene Säulenträger (2) aufweist, dadurch gekennzeichnet, daß an und zwischen den Säulenträgern (2) mindestens ein rückwärtiger, gehäuseartiger nach vorn offener, das Abstandselement bildender Säulengrundkörper (3) angeordnet ist, der über je mindestens ein Verbindungselement (4) lösbar befestigt ist und daß der Säulengrundkörper (3) durch ein vorderes Gehäuseteil (6) abdeckbar ist.

2. Komponentensäule nach Anspruch 1, **dadurch gekennzeichnet**, daß am Säulengrundkörper (3) an beiden Seiten jeweils mindestens ein Verbindungsstück (4) lösbar befestigt ist, welches seinerseits an einem Säulenträger (2) befestigt ist.

3. Komponentensäule noch Anspruch 1 oder 2, **dadurch gekennzeichnet,** daß die Seitenwände (7) des vorderen Gehäuseteils (6) die nach innen versetzten Seitenwände (8) des Säulengrundkörpers (3) mindestens bereichsweise übergreifen.

4. Komponentensäule nach einem der vorhergehenden Ansprüche 1 bis 3, **dadurch gekennzeichnet**, daß an der Rückseite des Säulengrundkörpers (3) eine senkrechte Nut (5) eingeformt ist.

## Claims

1. Component column, in particular for vehicles for transporting persons, whereby the component column exhibits at least one communication, actuating and/or information component which is fastened in or on a column body (1) extending vertically and whereby the column body (1) exhibits two vertically disposed column members (2) held a distance apart by means of a spacing element, characterised in that at least one rearward housing-like column base body (3) open to the front and forming the spacing element is disposed between the column members (2) and is fastened detachably by means of at least one connecting element (4) and in that the column base body (3) can be covered by a front housing part (6).

2. Component column according to claim 1, characterised in that in each case at least one connecting element (4) is fastened detachably to the column base body (3) on both sides and is then fastened to a column member (2).

3. Component column according to claim 1 or 2, characterised in that the side walls (7) of the front housing part (6) embrace the inwardly offset side walls (8) of the column base body (3) at least in areas.

4. Component column according to one of the preceding claims 1 to 3, characterised in that a vertical channel (5) is formed at the back of the column base body (3).

## Revendications

1. Colonne de composants, en particulier pour des véhicules pour le transport de personnes, la colonne de composants comportant au moins un composant de communication, d'actionnement et/ou d'information qui est fixé dans ou sur un corps de colonne vertical (1), et le corps de colonne (1) comportant deux supports de colonne (2) disposés à la verticale et maintenus espacés par un élément d'écartement, **caractérisée** en ce qu'il est prévu sur et entre les supports de colonne (2) au moins un corps de base de colonne arrière (3) en forme de boîtier, ouvert vers l'avant et définissant l'élément d'écartement, qui est fixé de manière amovible grâce à au moins un élément de liaison (4), et en ce que le corps de base de colonne (3) est apte à être couvert par un élément formant boîtier avant (6).

2. Colonne de composants selon la revendication 1, **caractérisée** en ce qu'il est prévu, fixée de manière amovible de chaque côté du corps de base de colonne (3), au moins une pièce de liaison (4) qui est elle-même fixée à un support de colonne (2).

3. Colonne de composants selon la revendication 1 ou 2, **caractérisée** en ce que les parois latérales (7) de l'élément formant boîtier avant (6) recouvrent au moins par zones les parois latérales (8) du corps de base de colonne (3) qui sont désaxées vers l'intérieur.

4. Colonne de composants selon l'une des revendications 1 à 3 précédentes, **caractérisée** en ce qu'une rainure verticale (5) est réalisée sur' l'arrière du corps de base de colonne (3).
